# EUROPÄISCHE PATENTSCHRIFT

(11) **EP 0 796 758 B1**
(45) Veröffentlichungstag und Bekanntmachung des Hinweises auf die Patenterteilung: **21.04.2004**
(21) Anmeldenummer: 97101937.7
(22) Anmeldetag: 07.02.1997
(51) Int. Cl.: B60L 11/02

(54) **Antriebseinheit für ein Fahrzeug, insbesondere für Stadtbusse**
Traction unit of a vehicle, especially for city buses
Unité de traction pour véhicule, en particulier pour des autobus de ville

(30) Priorität: 19.03.1996 DE 19610753
(43) Veröffentlichungstag der Anmeldung: 24.09.1997
(73) Patentinhaber: Voith Turbo GmbH & Co. KG, 89522 Heidenheim (DE)
(72) Erfinder: Dietzel, Bernd, 89428 Syrgenstein (DE); Müller, Robert, Dr., 89407 Dillingen (DE)
(74) Vertreter: Dr. Weitzel & Partner

(56) Entgegenhaltungen:
- EP-A- 0 556 942
- WO-A-94/09327
- DE-C- 4 335 849

## Beschreibung

Die Erfindung betrifft ein Verfahren zum Betreiben einer Antriebseinheit für Fahrzeuge, insbesondere für Stadtomnibusse, im einzelnen mit den Merkmalen aus dem Oberbegriff des Anspruchs 1; ferner eine Vorrichtung, insbesondere eine Antriebseinheit zur Durchführung des Verfahrens.

Die Entwicklungstendenz im Fahrzeugbau zielt neben einem vergrößerten Raumangebot, einem verbesserten Fahrverhalten, insbesondere Beschleunigungs- und Verzögerungsverhalten, auf eine erhebliche Verringerung der Schadstoffemission, insbesondere der CO₂-Emission, aus Gründen des Umweltschutzes ab. Zu diesem Zweck finden Antriebssysteme mit Antriebsquellen in Form von Verbrennungsmotoren, insbesondere Dieselmotoren, sowie Elektromotoren-Anwendung. Derartige Antriebskonzepte sind beispielsweise in den folgenden Druck- und Offenlegungsschriften offenbart:
1. P 43 35 849
2. VOITH-Firmenprospekt G 1407

In der ersten Druckschrift ist eine Antriebseinheit offenbart, welche insbesondere für einen Oberleitungsbus oder ein Schienenfahrzeug geeignet ist, mit einer an eine externe elektrische Stromversorgung anschließbaren elektrische Anschlußeinrichtung, welche mit einem Stromrichter verbunden ist. Des weiteren ist ein erstes Antriebsaggregat in Form eines Elektromotors vorgesehen, welche an den Stromrichter angeschlossen ist, sowie ein zweites Antriebsaggregat in Form eines Verbrennungsmotors und ein Generator, der einerseits mit dem Verbrennungsmotor und andererseits über den Stromrichter mit dem Elektromotor verbunden ist. Zusätzlich ist mindestens ein Nebenaggregat für das Verkehrsmittel vorgesehen. Der Generator und/oder der Elektroantriebsmotor kann dabei vorzugsweise als Transversalflußmaschine ausgebildet sein. Die Antriebseinheit ist dabei derart konzipiert, daß der Generator mechanisch ständig mit den jeweiligen Nebenaggregaten verbunden ist, während der Verbrennungsmotor in schaltbarer Weise oder direkt sowohl an diese Nebenaggregate als auch an den Generator ankoppelbar ist. Dies erfolgt so, daß einerseits bei Betrieb des Elektromotors über eine externe elektrische Stromversorgung der Generator vom Verbrennungsmotor getrennt ist, und der von der externen elektrischen Stromversorgung versorgte Generator als Elektromotor betrieben wird und die Nebenaggregate antreibt. Andererseits treibt im Betrieb des Elektromotors über den Verbrennungsmotor der Verbrennungsmotor sowohl den Generator als auch die Nebenaggregate an. Bei den für den allgemeinen Betrieb eines Schienenfahrzeuges oder eines Busses erforderlichen Nebenaggregaten kann es sich dabei beispielsweise um eine Wasserpumpe, einen Luftkompressor, eine Servohilfspumpe für eine Servolenkung oder ähnliches handeln.

Bei Vorsehen einer schaltbaren Verbindung zwischen dem Verbrennungsmotor und den jeweiligen Nebenaggregaten kann diese beispielsweise mittels einer Schaltkupplung realisiert werden. Zusätzlich besteht die Möglichkeit, ein Verteilergetriebe zwischen dem Verbrennungsmotor, dem Generator und den jeweiligen Nebenaggregaten vorzusehen. Der Generator selbst oder wahlweise der Verbrennungsmotor kann mit mehreren Nebenaggregaten gleichzeitig verbunden sein.

Aus dem Sonderdruck G 1407 der J. M. Voith GmbH ist ein dieselektrisches Antriebssystem für Nutzfahrzeuge, insbesondere für Stadtbusse, bekannt, welches mindestens einen mit einem Antriebsrad verbundenen Elektromotor, der vorzugsweise als Transversalflußmaschine ausgeführt ist, umfaßt. Jeder Elektromotor, insbesondere jede Transversalflußmaschine, wird dabei von einer Wechselrichtereinheit mit elektrischer Leistung versorgt. Des weiteren ist ein Generator vorgesehen, welcher ebenfalls vorzugsweise als Transversalflußmaschine ausgeführt sein kann, und der mechanisch mit einem Verbrennungsmotor, insbesondere einem Dieselmotor, koppelbar ist. Zur Erzeugung der elektrischen Leistung wird der Generator durch einen Vierquadrantenwechselrichter angesteuert. Für die Vorgabe der Sollwerte der Radmotoren sowie die Drehzahlsteuerung des Dieselmotors ist eine übergeordnete Fahrsteuerung vorgesehen, welche u.a. in der Lage ist, den Fahrerwunsch auszuwerten. Zusätzliche Nebenaggregate, wie beispielsweise eine Wasserpumpe, ein Luftkompressor oder eine Servohilfspumpe für die Servolenkung, können dabei parallel zum Verbrennungsmotor geschaltet und durch diesen angetrieben werden.

Derartige sogenannte dieselelektrische Antriebskonzepte, bei welchen der Antrieb der Räder über einen mittels einer Verbrennungskraftmaschine/Generatoreinheit angetriebenen Elektromotor erfolgt, bieten gegenüber Antriebskonzepten mit lediglich Verbrennungskraftmaschinen als Antriebsquelle und mechanischer Leistungsübertragung zu den Rädern den Vorteil einer geringeren Schadstoffemission, einer geringen Geräuschemission und niedrigen Kraftstoffverbrauches. Dabei ist es gleich, ob die Elektromotoren den Radachsen direkt zugeordnet sind oder ob nur ein zentral am Chassis gelagerter Elektromotor vorgesehen ist, der mittels mechanischen Übertragungselementen die Räder oder Achsen antriebt.
Aufgrund der zunehmenden Anforderungen in bezug auf die Verringerung der Umweltbelastung durch Fahrzeuge, insbesondere im Stadtverkehr, bei welchem ständiger Stop-and-Go-Verkehr, d.h. ein ständiger Wechsel zwischen Halten, Anfahren und Beschleunigen sowie wiederum Verzögern gängig ist, sind Überlegungen dahingehend zu treffen, die bestehenden Antriebsstränge hinsichtlich der Leistungsübertragung zu verbessern.
Die Patentanmeldung EPO 556942 offenbart ein dieselelektrische Antriebssystem mit mindestens einem an ein Antriebsrad gekoppelten Elektromotor, wobei der Verbrennungsmotor mit minimalem Verbrauch angesteuert wird.

Der Erfindung liegt deshalb die Aufgabe zugrunde, eine Antriebseinheit der eingangs genannten Art derart weiterzuentwickeln, daß eine optimale Ausnutzung des vorhandenen Antriebsquellenpotentials erfolgt, mit Blick auf eine Verringerung der Schadstoffemission und das Erreichen von vorgegebenen Fahrleistungen, wie bspw. einer bestimmten Beschleunigung.

Die erfindungsgemäße Lösung der Aufgabe ist durch die Merkmale des Anspruchs 1 charakterisiert. Die vorrichtungsmäßige Umsetzung erfolgt mittels der Merkmale des Anspruchs 2. Vorteilhafte Ausführungen sind in den Unteransprüchen wiedergegeben.

Erfindungsgemäß wird dazu der Arbeitspunkt des Verbrennungsmotors, insbesondere des Dieselmotors, der sich unter Berücksichtigung der Fahrleistung und der zum Betrieb der Nebenaggregate erforderlichen Nebenleistung ergibt, im Hinblick auf die Inbetriebnahme bzw. des Betriebes der Nebenaggregate eingestellt. Die Erfinder haben erkannt, daß durch das Zusatzmoment, welches durch die Nebenverbraucher im Antriebsstrang abgenommen wird, der Arbeitspunkt des Verbrennungsmotors, insbesondere des Dieselmotors, sich hin zu einem höheren Drehmoment und damit - bezogen auf das Kraftstoff/Drehmomentenkennfeld - unter Umständen zu einem Punkt ungünstigeren Verbrauchs sowie zu einem Punkt erhöhter Partikelemmission hin verschiebt. Um dies zu vermeiden, wird bei der Wahl des Arbeitspunktes das abgenommene Drehmoment bzw. Lastmoment durch die Nebenverbraucher mit berücksichtigt. Auch kann vorgesehen sein, den Arbeitspunkt im Diesel-Kennfeld so zu verschieben, daß bei eingeschalteten Nebenverbrauchern die gleichen Beschleunigungswerte erreicht werden, wie ohne Nebenverbraucher. Diese sind jedoch zum Teil nur zeitweise eingeschaltet. Erfindungsgemäß ist daher jedem Nebenverbraucher wenigstens eine Überwachungseinrichtung zugeordnet, die beispielsweise als Sensor ausgeführt ist, und die den Betriebszustand dieser Nebenaggregate überwacht, und/oder lediglich das Ab- und Zuschalten der Nebenaggregate ermittelt. Das Erkennen des Betriebszustandes der Nebenverbraucher kann auch derart erfolgen, daß das der Steuereinrichtung bekannte Generatormoment (d.h. das Moment, mit welchem der Generator den Verbrennungsmotor belastet) mit demjenigen Moment verglichen wird, mit dem der Verbrennungsmotor insgesamt belastet wird. Bei eingeschalteten Nebenverbrauchem wird dieses Gesamtmoment höher sein; bei ausgeschalteten Nebenverbrauchern ist es gleich dem Generatormoment. Das Gesamt-Lastmoment ist der Steuereinrichtung, z.B. vom Motorsteuergerät, mit welchem dieses verbunden ist, beispielsweise einem CAN-Bus oder ähnlichem, jederzeit bekannt. Dieses wird vom Motorsteuergerät aus den Einspritzdaten berechnet und auf dem CAN-Bus ausgegeben. Die ermittelte Information wird dann dahingehend verarbeitet, daß am Leistungsstellglied des Verbrennungsmotors eine Verstellung derart erfolgt, daß bezüglich der Hauptabnahmequelle Generator ein Arbeitspunkt auf der Kennlinie für das Generatormoment bei höheren Drehzahlen und Drehmomenten eingestellt wird, wobei dieser im Bereich eines geringen Kraftstoffverbrauches und minimaler Partikelemmission liegt; bzw. der Arbeitspunkt wird derart verschoben, daß die gewünschten Beschleunigungswerte erreicht werden.

Vorrichtungsmäßig ist der Antriebseinheit eine Steuereinrichtung zugeordnet, welche wenigstens einen Eingang und einen Ausgang umfaßt. Die Anzahl der Eingänge entspricht dabei vorzugsweise der Anzahl der Nebenaggregate. Jedem Nebenaggregat ist wenigstens eine Überwachungseinrichtung zugeordnet, welche eine den Betrieb der Nebeneinrichtung charakterisierenden Größe überwacht. Dieser Größe kann dabei lediglich das Signal für die Inbetriebnahme oder Außerbetriebnahme des Nebenaggregates entsprechen. Eine andere Möglichkeit besteht darin, eine dem Drehmoment des Nebenaggregates proportionale Größe zu ermitteln. Aufgrund einer Kopplung zwischen den einzelnen Eingängen der Steuereinrichtung und den Überwachungseinrichtungen der Nebenaggregate werden diese Signale der Steuereinrichtung zugeführt. Der Betriebszustand der Nebenverbraucher kann auch dadurch ermittelt werden, daß das der Steuereinrichtung bekannte Generatormoment (d.h. das Moment, mit welchem der Generator den Verbrennungsmotor belastet) mit demjenigen Moment verglichen wird, mit dem der Verbrennungsmotor insgesamt belastet wird, wie zuvor beschrieben. Die Steuereinrichtung umfaßt eine Speichereinrichtung, in welcher ein Drehzahl/Drehmomentenkennfeld für den entsprechenden Verbrennungsmotor abgelegt ist, wobei dieses Drehzahl/Drehmomentenkennfeld auch aus einer Reihe von abgestuften Momentenkennlinien bestehen kann. Des weiteren ist in diesem Kennfeld wenigstens eine Kennlinie für das zu erzeugende Generatormoment abgelegt. Erfindungsgemäß soll der Arbeitspunkt der Verbrennungskraftmaschine, insbesondere des Dieselmotors, vorzugsweise auf der Kennlinie für das Generatormoment liegen. Dazu ist eine eine Stellgröße bildende Einheit vorgesehen, welche im Hinblick auf den zu erwartenden Leistungsbedarf, welcher sich hinsichtlich Drehzahl und Drehmoment nach der Generatormomentenkennlinie richtet, eine Stellgröße für die Verstellung des Leistungsgliedes der Verbrennungskraftmaschine bildet. Diese Stellgröße wird am Ausgang der Steuereinrichtung ausgeführt, welche mit dem Leistungsstellglied des Verbrennungsmotors koppelbar ist.

Die Funktion der Steuereinrichtung kann dabei beispielsweise auch in der Fahrsteuerung als Zusatzfunktion bei entsprechender Ausgestaltung mit übernommen werden. Vorteilhaft ist in diesem Zusammenhang das Vorsehen einer zentralen Steuerungseinheit, welche derart ausgeführt ist, daß eine Vielzahl von verschiedenen Steuerungsaufgaben mit dieser ermöglicht wird.

Die erfindungsgemäße Lösung ermöglicht ein Arbeiten des Verbrennungsmotors, insbesondere des Dieselmotors im Bereich eines geringen Kraftstoffbedarfes, was sich in einer verringerten Schadstoffemission niederschlägt, bzw. in einem Bereich, wo die geforderten Fahrleistungen (Beschleunigungen) erreicht werden können.. Der Wirkungsgrad bei der Leistungsübertragung wird hinsichtlich der Aufsplittung in Drehzahl und Drehmoment optimiert.

Die erfindungsgemäße Lösung ist nachfolgend anhand von Figuren erläutert. In diesen ist folgendes dargestellt:
- Figur 1: verdeutlicht das Drehzahl/Drehmomentendiagramm für eine Verbrennungskraftmaschine mit eingezeichneten Kraftstoffverbrauchskennlinien sowie einer Kennlinie für das während des Betriebes zu erbringende Generatormoment;
- Figur 2: verdeutlicht schematisch den Aufbau einer Antriebseinheit.

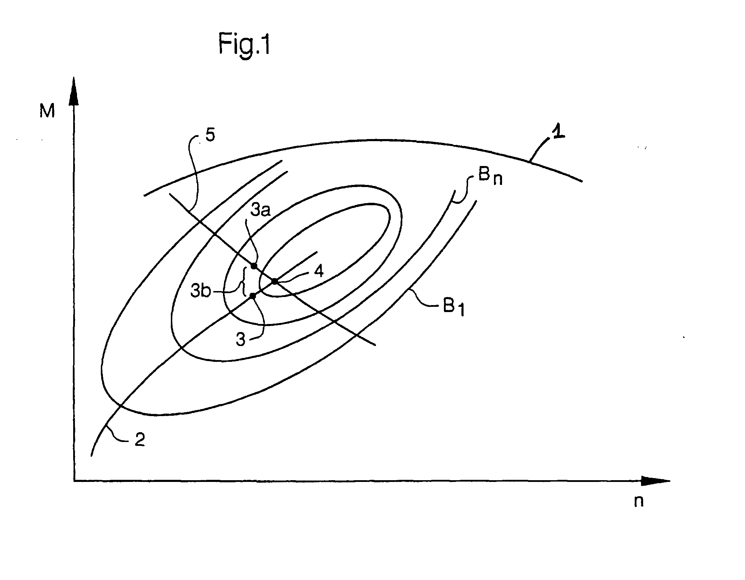

In der Figur 1 ist das Drehzahl/Drehmomentenkennfeld für eine Verbrennungskraftmaschine, insbesondere für einen Dieselmotor dargestellt (M/n-Diagramm). Die Linien konstanten Verbrauches oder konstanter Emmission sind hier mit B1 bis Bn bezeichnet, wobei der Kraftstoffverbrauchswert bzw. der Emmissionswert von B1 bis Bn abnimmt. Im Kennfeld ist des weiteren die Arbeitskurve der Verbrennungskraftmaschine eingetragen. Diese Kennlinie ist hier mit 2 bezeichnet. Die Hyperbeln konstanter Leistung sind mit 5 bezeichnet. Ausgangspunkt für die Betrachtung ist ein Arbeitspunkt 3 der Verbrennungskraftmaschine, welcher dem Belastungsmoment des Generators entsprechend der gegebenen Antriebsleistung der Verbrennungskraftmaschine bei optimalem spezifischen Verbrauch zum Antrieb der Räder entspricht. Werden in diesem Arbeitspunkt dabei zusätzlich Nebenaggregate vom Antriebsstrang versorgt, führt das erforderliche Zusatzmoment für die Nebenaggregate zu einer Verschiebung des Arbeitspunktes des Dieselmotors hin zum Punkt 3a, d.h. bei im wesentlichen gleichbleibender Drehzahl zu höheren Drehmomenten. Dieser Punkt 3a liegt jedoch unter Umständen in einem Bereich ungünstigeren Verbrauches des Dieselmotors oder einer erhöhten Partikelemmission als der Arbeitspunkt 3. Bei Berücksichtigung des für die Nebenverbraucher bzw.

Nebenaggregate aufzubringenden Zusatzmomentes erfolgt die Verschiebung des Arbeitspunktes vom Punkt 3 zu einem Arbeitspunkt 4, welcher ebenfalls auf der Kennlinie für das Generatormoment bei optimalem spezifischen Verbrauch liegt. Im Arbeitspunkt 4 zeichnet sich die Verbrennungskraftmaschine, insbesondere der Dieselmotor durch einen verringerten Kraftstoffverbrauch gegenüber dem Arbeitspunkt 3a aus. Der Kraftstoffverbrauch kann jedoch entweder gleich oder geringfügig höher als im Arbeitspunkt 3 sein.

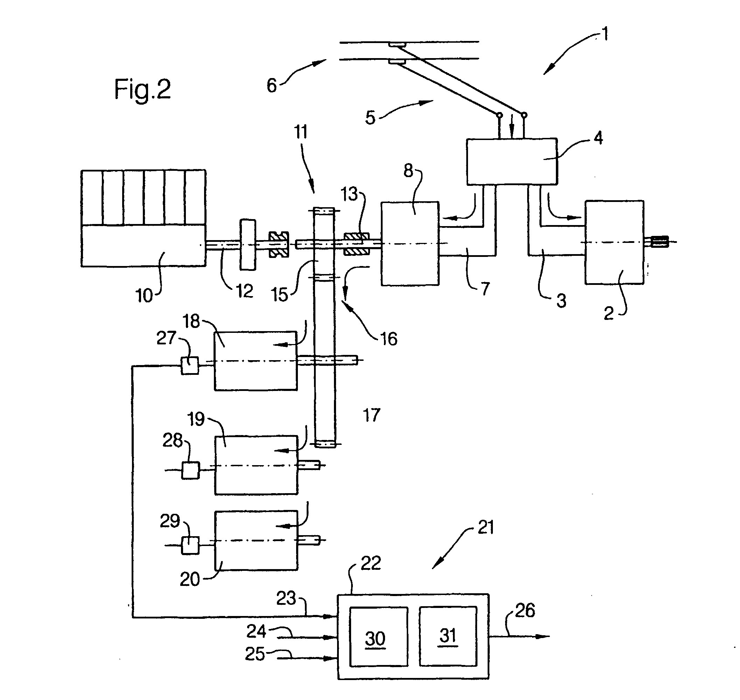

Die Figur 2 verdeutlicht schematisch eine bespielhafte Ausführungsform für eine erfindungsgemäße Antriebseinheit 1, bei welcher beispielsweise ein Bus von einem Elektromotor 2, welcher als Transversalflußmaschine ausgebildet sein kann, angetrieben wird. Die Transversalflußmaschine 2 ist über eine schematisch angedeutete Leitung 3 an einen Stromrichter 4 angeschlossen, der zweckmäßigerweise als Wechselrichter ausgelegt ist. Dieser Stromrichter 4 ist über eine elektrische Anschlußeinrichtung 5, beispielsweise bei einen Oberleitbus einen ausfahrbaren Stromabnehmer an dessen Dach, an eine Oberleitung als externe elektrische Stromversorgung 6 anschließbar, welche ebenfalls hier nur schematisch angedeutet ist. Stromrichter 4 ist dann über eine weitere Leitung 7 mit einem Generator 8 koppelbar. Vorzugsweise ist der Generator 8 als Transversalflußmaschine ausgeführt. Die Transversalflußmaschine ist dabei wahlweise als Generator oder als Elektromotor betreibbar. Des weiteren ist ein Verbrennungsmotor 10 vorgesehen. Zwischen dem Verbrennungsmotor 10 und dem Generator 8 ist ein Verteilergetriebe 11 angeordnet, welches eine mit dem Verbrennungsmotor 10 verbundene erste Welle 12 und eine mit dem Generator verbundene zweite Welle 13 aufweist. Mit der Welle 13 ist mindestens ein Teil 15 einer Drehmomenteneinrichtung 16 drehfest verbunden. Das Teil 15 ist hier als Zahnrad ausgeführt, welches mit einem zweiten Teil 17 einer Drehmomenteneinrichtung im Eingriff steht, um das Drehmoment auf ein Nebenaggregat 18 zu übertragen. Das Nebenaggregat 18 ist dabei wenigstens mittelbar mit dem zweiten Teil 17 der Drehmomenteneinrichtung 16 koppelbar. Zusätzlich können weitere Nebenaggregate, beispielsweise hier dargestellt 19 und 20, vorgesehen werden, die wenigstens mittelbar mit der Drehmomentenübertragungseinrichtung 16 koppelbar sind. Die Nebenaggregate 18 bis 20 können dabei beispielsweise als Lüfter, als Kompressor oder aber auch als Servohilfspumpe ausgeführt sein.

Der Antriebseinheit 1 ist eine Steuervorrichtung 21 zugeordnet, welche eine Steuereinrichtung 22 umfaßt, die wenigstens entsprechend der Anzahl der Nebenaggregate Eingänge aufweist. Im dargestellten Fall weist die Steuereinrichtung 22 mindestens drei Eingänge, einen ersten Eingang 23, einen zweiten Eingang 24 und einen dritten Eingang 25 sowie wenigstens einen Ausgang 26 auf. Jedem Nebenaggregat 18 bis 20 ist wenigstens eine Überwachungseinrichtung zur Erfassung einer den Betriebszustand des Nebenaggregates charakterisierenden Größe zugeordnet. Die Überwachungseinrichtung des Nebenaggregates 18 ist hier mit 27, die zweite Überwachungseinrichtung für das zweite Nebenaggregat 19 ist mit 28, und die dritte Überwachungseinrichtung für das Nebenaggregat 20 ist mit 29 bezeichnet. Die Überwachungseinrichtung 27 ist dabei wenigstens mittelbar mit dem ersten Eingang 23, die Überwachungseinrichtung 28 mit dem zweiten Eingang 24 und die Überwachungseinrichtung 29 mit dem dritten Eingang 25 der Steuereinrichtung 22 koppelbar. Die Steuereinrichtung 22 umfaßt des weiteren eine Speichereinrichtung 30, in welcher das Drehzahl/Drehmomentenkennfeld für die Verbrennungskraftmaschine, hier den Dieselmotor 10, ablegbar ist. Das Kennfeld kann dabei eine Vielzahl von Kennlinien umfassen oder aber auch lediglich ausgewählte Kennlinien für einzelne Laststoffe. Des weiteren ist im Kennfeld wenigstens eine Kennlinie für das erforderliche Moment des Generators 8 ablegbar. Diese Kennlinie, welche der Kennlinie I in der Figur 1 entspricht, kann dabei beispielsweise der Kennlinie für einen minimalen Verbrauch bei optimalem Generatormoment entsprechen. Eine eine Stellgröße bildende Einrichtung 31, welche ebenfalls zur Steuereinrichtung 22 gehört, ermittelt dabei die am Leistungsstellglied der Verbrennungskraftmaschine bzw. des Dieselmotors 10 erforderlich wirksam werdende Stellgröße Y, welche am Ausgang 26 der Steuereinrichtung ausgegeben wird. Der Ausgang 26 ist dabei mit einem hier nicht dargestellten Leistungsstellglied der Verbrennungskraftmaschine, d.h. des Dieselmotors 10, koppelbar.

Die Steuereinrichtung 22 kann beispielsweise als elektronische Steuereinheit ausgeführt sein, in welcher die den Betriebszustand der Nebenaggregate charakterisierenden Größen verarbeitet werden, beispielsweise innerhalb einer vorprogrammierbaren Routine oder aber über logische Verknüpfungen und in welcher der optimale Arbeitspunkt bestimmt und für diesen ein entsprechendes Signal zur Verstellung des Leistungsstellgliedes der Verbrennungskraftmaschine ausgegeben wird.

Die in der Figur 2 dargestellte Antriebseinheit ist nur ein Beispiel. Die Möglichkeit der Arbeitspunkteinstellung kann bei allen denkbaren Ausführungen dieselelktrischer Anttriebskonzepte Anwendung finden.

## Patentansprüche

1. Antriebseinheit (1) für Nutzkraftwagen
1.1 mit einer Verbrennungskraftmaschine (10);
1.2 mit mindestens einem mit wenigstens einem Antriebsrad wenigstens mittelbar koppelbaren Elektromotor (2);
1.3 mit einem mechanisch mit der Verbrennungskraftmaschine (10) koppelbaren Generator (8);
1.4 jeder Elektromotor (2) wird von einer elektronischen Wechselrichtereinheit (4) über den Generator (8) mit elektrischer Leistung versorgt;
1.5 mit wenigstens einem, mit der Verbrennungskraftmaschine (10) und/oder dem Generator (8) schaltbar koppelbaren Nebenaggregat (18, 19, 20);
1.6 mit einer Steuereinrichtung (22), umfassend wenigstens einen Eingang (23, 24, 25) und einen Ausgang (26);
1.7 mit wenigstens einer, den Nebenaggregaten (18, 19, 20) zugeordneten Überwachungseinrichtung (27, 28, 29) zur Erfassung wenigstens einer, den Betriebszustand der Nebenaggregate (18, 19, 20) wenigstens mittelbar charakterisierenden Größe, wobei wenigstens die beiden Grenzzustände Inbetrieb/Außerbetrieb berücksichtigt werden;
1.8 die Überwachungseinrichtung (27, 28, 29) ist mit dem Eingang (23, 24, 25) koppelbar;
1.9 die Steuereinrichtung (22) umfaßt eine Auswerteinrichtung für die erfaßten Betriebszustände der Nebenaggregate (18, 19, 20);
1.10 die Auswerteinrichtung umfaßt Mittel (31), die bei Betrieb der Nebenaggregate die erforderliche von der Verbrennungskraftmaschine aufzubringende Gesamtleistung ermitteln und daraus eine Stellgröße Y bilden, die am Ausgang (26) der Steuereinrichtung (22) ausgegeben wird;
1.11 der Ausgang der Steuereinrichtung (22) ist mit dem Leistungsstellglied der Verbrennungskraftmaschine koppelbar;
1.12 die Stellgröße wird von der Auswerteinrichtung entsprechend dem Kennfeld der Verbrennungskraftmaschine (10) derart gebildet, daß ein Arbeitspunkt der Verbrennungskraftmaschine (10) bei zugeschalteten Nebenaggregaten (18, 19, 20) auf der Kennlinie (I) minimalen Verbrauches angesteuert wird.

2. Antriebseinheit (1) nach Ansprch 1, **dadurch gekennzeichnet, daß** der Eleketromotor (2) als Transversalflußmaschine (3) ausgeführt ist.

3. Antriebseinheit (1) nach einem der Ansprüche 1 oder 2, **dadurch gekennzeichnet, daß** der Elektromotor (2) zentral am Chassis gelagert ist und über mechanische Drehmomentenübertragungseinrichtungen mit einer Achse des Fahrzeuges oder den Rädern koppelbar ist.

4. Antriebseinheit (1) nach einem der Ansprüche 1 bis 3, **dadurch gekennzeichnet, daß** den einzelnen Rädern jeweils ein Elektromotor (2) direkt zugeordnet ist, der direkt oder über Drehmomentenübertragungseinrichtungen mit den Radachsen oder den Radnaben gekoppelt ist.

5. Antriebseinheit (1) nach einem der Ansprüche 3 oder 4, **dadurch gekennzeichnet, daß** die Drehmomentenübertragungseinrichtungen Drehzahl/Drehmomentenwandlungseinrichtungen umfassen.

6. Antriebseinheit (1) nach einem der Ansprüche 1 bis 5, **dadurch gekennzeichnet, daß** das Mittel eine programmierte Routine ist.

## Claims

1. A drive unit (1) for commercial vehicles;
1.1 with an internal combustion engine (10);
1.2 with at least one electric motor (2) which can be coupled at least indirectly with at least one driving wheel;
1.3 with a generator (8) which can be coupled mechanically with the internal combustion engine (10);
1.4 with each electric motor (2) being supplied with electric power by an electronic inverted rectifier unit (4) via the generator (8);
1.5 with at least one auxiliary unit (18, 19, 20) which can be coupled in a switchable manner with the internal combustion engine (10) and/or the generator (8);
1.6 with a control device (22) comprising at least one input (23, 24, 25) and one output (26);
1.7 with at least one monitoring device (27, 28, 29) associated with the auxiliary units (18, 19, 20) for detecting at least one variable which characterizes at least indirectly the operating state of the auxiliary units (18, 19, 20), with at least the two boundary states of activated and deactivated being considered;
1.8 with the monitoring device (27, 28, 29) being capable of being coupled with the input (23, 24, 25);
1.9 with the control device (22) comprising an evaluation device for the detected operating states of the auxiliary units (18, 19, 20);
1.10 with the evaluation device comprising means (31) which determine the required overall output to be provided by the internal combustion engine during the operation of the auxiliary units and form a correcting variable Y therefrom which is output at the output (26) of the control device (22);
1.11 the output of the control device (22) can be coupled with the power actuator of the internal combustion engine;
1.12 the correcting variable is formed by the evaluation device according to the characteristics map of the internal combustion engine (10) in such a way that an operating point of the internal combustion engine (10) is triggered towards the characteristic (I) of minimal consumption when the auxiliary units (18, 19, 20) are activated.

2. A drive unit (1) as claimed in claim 1, **characterized in that** the electric motor (2) is arranged as a transverse flux machine (3).

3. A drive unit (1) as claimed in one of the claims 1 or 2, **characterized in that** the electric motor (2) is held centrally on the body and can be coupled with an axle of the vehicle or the wheels via mechanical torque transmission devices.

4. A drive unit (1) as claimed in one of the claims 1 to 3, **characterized in that** an electric motor (2) is directly associated with each individual wheel; which electric motor is coupled directly or via torque transmission devices with the wheel axles or the wheel hubs.

5. A drive unit (1) as claimed in one of the claims 3 or 4, **characterized in that** the torque transmission devices comprise speed-torque conversion devices.

6. A drive unit (1) as claimed in one of the claims 1 to 5, **characterized in that** the means is a programmed routine.

## Revendications

1. Unité de traction (1) pour véhicules utilitaires,
1.1 avec un moteur à combustion interne (10)
1.2 avec au moins un moteur électrique (2) pouvant être au moins indirectement couplé avec au moins une roue motrice,
1.3 avec un générateur (8) en couplage mécanique avec le moteur à combustion interne (10),
1.4 chaque moteur électrique (2) étant alimenté en puissance électrique par une unité de convertisseur électronique (4) par l'intermédiaire du générateur (8),
1.5 avec au moins un groupe auxiliaire (18, 19, 20) pouvant être couplé de manière commutable avec le moteur à combustion interne (10) et/ou le générateur (8),
1.6 avec un dispositif de commande (22) comprenant au moins une entrée (23, 24, 25) et une sortie (26),
1.7 avec au moins un dispositif de surveillance (27, 28, 29) associé aux groupes auxiliaires (18, 19, 20) pour la détection d'au moins une grandeur caractérisant au moins indirectement l'état de fonctionnement des groupes secondaires (18, 19, 20), en prenant en compte au moins les deux états limites « en service » et « hors service »,
1.8 le dispositif de surveillance (27, 28, 29) pouvant être couplé à l'entrée (23, 24, 25),
1.9 le dispositif de commande (22) comprenant un dispositif d'interprétation pour les états de fonctionnement détectés des groupes auxiliaires (18, 19, 20) ;
1.10 le dispositif d'interprétation comprenant des moyens (31) qui déterminent, pendant le fonctionnement des groupes auxiliaires, la puissance totale que doit fournir le moteur à combustion interne et qui constituent à partir de celle-ci une grandeur de réglage Y qui est délivrée à la sortie de commande (26) du dispositif de commande (22),
1.11 la sortie du dispositif de commande (22) pouvant être couplée à l'organe de réglage de la puissance du moteur à combustion interne,
1.12 la grandeur de réglage étant formée par le dispositif d'interprétation en fonction du champ caractéristique du moteur à combustion interne (10) de telle manière qu'un point de travail du moteur à combustion interne (10) soit sélectionné sur la caractéristique (I) de consommation minimale lorsque les groupes auxiliaires (18, 19, 20) sont connectés.

2. Unité de traction (1) selon la revendication 1, **caractérisée en ce que** le moteur électrique (2) est construit comme un moteur à flux transversal (3).

3. Unité de traction (1) selon l'une quelconque des revendications 1 ou 2, **caractérisée en ce que** le moteur électrique (2) est supporté en position centrale sur le châssis et peut être couplé à un essieu du véhicule ou aux roues par des dispositifs mécaniques de transmission du couple de rotation.

4. Unité de traction (1) selon l'une quelconque des revendications 1 à 3, **caractérisée en ce que** chaque roue est directement associée à un moteur électrique (2) qui est couplé directement ou par l'intermédiaire de dispositifs de transmission du couple de rotation aux essieux ou aux moyeux des roues.

5. Unité de traction (1) selon l'une quelconque des revendications 3 ou 4, **caractérisé en ce que** les dispositifs de transmission du couple de rotation comprennent des dispositifs de conversion de vitesse de rotation/couple de rotation.

6. Unité de traction (1) selon l'une quelconque des revendications 1 à 5, **caractérisé en ce que** le moyen est une routine programmée.
